# EUROPÄISCHE PATENTSCHRIFT

(11) **EP 3 028 436 B1**
(45) Veröffentlichungstag und Bekanntmachung des Hinweises auf die Patenterteilung: **01.03.2017**
(21) Anmeldenummer: 14732504.7
(22) Anmeldetag: 20.06.2014
(51) Int. Cl.: H04L 29/08

(54) **VERFAHREN ZUR BEREITSTELLUNG EINER FUNKTION IN EINEM RECHNERSYSTEM EINES FAHRZEUGS**
METHOD FOR PROVIDING A FUNCTION IN A COMPUTER SYSTEM OF A VEHICLE
PROCÉDÉ DE MISE À DISPOSITION D'UNE FONCTION DANS UN SYSTÈME DE CALCUL D'UN VÉHICULE

(30) Priorität: 02.08.2013 DE 102013012998
(43) Veröffentlichungstag der Anmeldung: 08.06.2016
(73) Patentinhaber: Audi AG, 85045 Ingolstadt (DE)
(72) Erfinder: ZÖRB-SCHLIEFER, Arne, 96175 Pettstädt (DE)
(74) Vertreter: Bauer, Dominik Michael
(86) Internationale Anmeldenummer: PCT/EP2014/001674
(87) Internationale Veröffentlichungsnummer: WO 2015/014424

(56) Entgegenhaltungen:
- US-A1- 2010 037 057
- MILLER B A ET AL: "HOME NETWORKING WITH UNIVERSAL PLUG AND PLAY", IEEE COMMUNICATIONS MAGAZINE, IEEE SERVICE CENTER, PISCATAWAY, US, Bd. 39, Nr. 12, 1. Dezember 2001 (2001-12-01), Seiten 104-109, XP001110509, ISSN: 0163-6804, DOI: 10.1109/35.968819
- RASHEED Y ET AL: "Home interoperability framework for the digital home", INTEL TECHNOLOGY JOURNAL, XX, US, Nr. 4, 15. November 2002 (2002-11-15), Seiten 5-16, XP002319906,

## Beschreibung

Die Erfindung betrifft ein Verfahren zur Bereitstellung einer Funktion in einem Rechnersystem eines Fahrzeugs sowie ein System zur Bereitstellung der Funktion.

Fahrzeuge, insbesondere Kraftfahrzeuge, verfügen in der Regel über ein Rechnersystem, mit dem eine Vielzahl von Funktionen in dem Fahrzeug bereitgestellt und/oder ausgeführt werden können. Das Rechnersystem des Fahrzeugs verfügt ferner regelmäßig über eine Schnittstelle, mit der es mit einem mobilen Endgerät wie einem Smartphone oder dergleichen in Kommunikationsverbindung gebracht werden kann. Damit können unterschiedlichste Fahrzeugzustände und Parameter abgerufen und gegebenenfalls auch eingestellt werden.

Auf dem Gebiet der allgemeinen Netzwerkprogrammierung erlauben beispielsweise Universal Plug and Play (UPnP) oder auch JINI der Firma Sun ein dynamisches Ermitteln von Funktionen unterschiedlichster Komponenten in einer vorgegebenen Programmierumgebung. Bei JINI oder auch UPnP sind eine Anwenderschnittstelle und/oder eine Treibersoftware von einem Host-Netzwerk zu einem neuen Gerät transferiert, um die Dienste des Host-Netzwerkes nutzen zu können. In diesen Fällen braucht ein Nutzer nur die Nutzerschnittstelle des mobilen Endgerätes zu bedienen, um die Dienste von zum Beispiel Fahrzeugkomponenten nutzen zu können.

So ist es bekannt, dass auf einem Smartphone ein UPnP-Server läuft, der beispielsweise von einer UPnP-Application (UPnP-App) erkannt werden kann, die auf dem Rechnersystem des Fahrzeugs läuft. Auf diese Weise kann dem Rechnersystem ein UPnP-Service zur Verfügung gestellt werden. Ein solches System offenbart beispielsweise die US 2010/0037057 A1.

Als nachteilig hat sich herausgestellt, dass lediglich eine eingeschränkte Funktionalität erreicht werden kann. Insbesondere können nur Dienste bereitgestellt werden, die im Rechnersystem des Fahrzeugs bereits bekannt sind.

Es ist somit die Aufgabe der Erfindung, ein Verfahren und ein System der gattungsgemäßen Art dahingehend zu verbessern, dass eine dahingehend zu verbessern, dass eine erweiterte Funktionalität bereitgestellt werden kann.

Als Lösung wird mit der Erfindung ein Verfahren zur Bereitstellung einer Funktion in einem Rechnersystem eines Fahrzeugs gemäß Anspruch 1 vorgeschlagen.

Durch das erfindungsgemäße Verfahren kann eine erweiterte Funktionalität im Fahrzeug durch Bereitstellung von insbesondere für das Rechnersystem des Fahrzeugs neuen Applikationen vom mobilen Endgerät erreicht werden. Im Unterschied zum Stand der Technik, insbesondere zum Prinzip basierend auf dem UPnP-Server, können mit der Erfindung gerade auch Dienste bereitgestellt werden, die das Rechnersystem des Fahrzeugs bislang nicht kennt. Dies erfolgt durch die Bereitstellung von Anwendungen vom mobilen Endgerät.

Zu diesem Zweck wird zunächst eine Kommunikationsverbindung zwischen dem Rechnersystem des Fahrzeugs und dem mobilen Endgerät hergestellt. Das mobile Endgerät kann beispielsweise ein Smartphone, ein iPhone, ein Tabletrechner, ein PDA oder dergleichen sein..

Der vom mobilen Endgerät bereitgestellte Dienst erlaubt die Bereitstellung einer Funktion in dem Rechnersystem des Fahrzeugs. Eine Funktion ist eine durch das Rechnersystem ausführbare Abfolge technischer Anweisungen, die ein physikalisches Ergebnis zur Folge hat, beispielsweise eine Anzeige eines Fahrzeugzustands, eine Aktion, insbesondere einen Fahrbetrieb des Fahrzeugs betreffend, erzeugen eines Steuerbefehls, Kombinationen hiervon und/oder dergleichen. Die Funktion liefert in der Regel ein technisches Resultat zurück. Der Dienst beschreibt allgemein eine technische, autarke Einheit, die zusammenhängende Funktionalitäten, insbesondere die Funktionen, zu einem Themenkomplex bündelt und über eine klar definierte Schnittstelle zur Verfügung stellt. Typische Beispiele für Dienste sind zum Beispiel Webservices, die Funktionalitäten für Dritte über das Kommunikationsnetzwerk verfügbar machen, Netzwerkdienste, Systemdienste, Telekommunikationsdienste und/oder dergleichen.

Zum Herstellen der Kommunikationsverbindung, die vorzugsweise eine drahtlose, insbesondere eine funkbasierte Kommunikationsverbindung, aber auch eine leitungsgebundene Kommunikationsverbindung sein kann, wird zunächst durch die Kommunikationspartner, nämlich das Rechnersystem des Fahrzeugs und das mobile Endgerät, ermittelt, dass der jeweils andere Kommunikationspartner vorhanden ist. Dann wird unter Anwendung eines Kommunikationsprotokolls die Kommunikation zwischen dem Rechnersystem des Fahrzeugs und dem mobilen Endgerät hergestellt. Zu diesem Zweck kann beispielsweise ein Polling von Protokollen vorgesehen sein, bis ein geeignetes Protokoll gefunden ist, welches eine bestimmungsgemäße Kommunikation zwischen den Kommunikationspartnern erlaubt.

Das mobile Endgerät übermittelt dann eine Endgeräteinformation an das Rechnersystem des Fahrzeugs, die das mobile Endgerät als Server kennzeichnet. Die Endgeräteinformation kann beispielsweise durch eine spezielle Codierung, ein Codewort oder dergleichen gebildet sein. Das Rechnersystem des Fahrzeugs empfängt die Endgeräteinformation und erfasst, ob es sich bei dem Kommunikationspartner, hier das Endgerät, um einen Server handelt. Dazu wird die Endgeräteinformation ausgewertet.

Sodann übermittelt das Rechnersystem des Fahrzeugs an das mobile Endgerät eine Fahrzeuginformation, die beispielsweise eine Fahrzeugidentifikation sein kann. Die Fahrzeuginformation erlaubt es dem mobilen Endgerät festzustellen, um was für einen Typ Fahrzeug es sich handelt. Zu diesem Zweck können, sofern das mobile Endgerät über entsprechende Dateien verfügt oder über ein globales Netzwerk wie dem Internet recherchieren kann, entsprechende erforderliche Fahrzeugdaten ermittelt werden. Aufgrund der ermittelten Fahrzeugdaten erzeugt das mobile Endgerät eine Liste von verfügbaren, insbesondere für das Rechnersystem des Fahrzeugs geeigneten Diensten des mobilen Endgeräts, die für das Rechnersystem des Fahrzeugs sodann bereitgestellt werden. Die vom mobilen Endgerät erstellte Liste von Diensten ist dabei nicht beschränkt auf Dienste, die beim Rechnersystem des Fahrzeugs bereits bekannt sind. Insbesondere können Dienste vorgesehen sein, die fahrzeugunbekannt sind, das heißt, neue Dienste gegenüber dem Rechnersystem des Fahrzeugs. Aufgrund des Verfahrensablaufs ist die Erfindung nicht mehr auf rechnersystembekannte Dienste beschränkt. Vorzugsweise sind die Dienste derart vom mobilen Endgerät ausgewählt, dass sie zu einer technologischen Basis des Fahrzeugs kompatibel sind.

Darüber hinaus kann vorgesehen sein, dass dem Rechnersystem des Fahrzeugs vom mobilen Endgerät eine Bedienoberfläche zur Verfügung gestellt wird. Dies erlaubt es, die Bedienung weiter zu verbessern. Auch die Bedienoberfläche ist vorzugsweise an die technologische Basis des Fahrzeugs angepasst beziehungsweise kompatibel zu ihr. Dies erlaubt es, für das Rechnersystem neue Dienste auf einfache Weise nutzerfreundlich verfügbar zu machen.

Eine weitere Ausgestaltung sieht vor, dass als die Kommunikationsverbindung eine IP-basierte Kommunikationsverbindung verwendet wird. Dies erlaubt es, eine Vielzahl von standardisierten Kommunikationsprotokollen zu nutzen und in hochflexibler Weise eine Kommunikationsverbindung zwischen unterschiedlichen Endgeräten auf der einen Seite und unterschiedlichen Rechnersystemen von Fahrzeugen auf der anderen Seite herzustellen. Darüber hinaus können natürlich auch Kommunikationsverbindungen zu mehr als zwei Kommunikationspartnern hergestellt werden. Zu diesem Zweck kann vorgesehen sein, dass das Rechnersystem des Fahrzeugs und/oder auch das mobile Endgerät jeweils eine feste Identifikation aufweisen. Dies kann zum Beispiel eine IP-Nummer sein. Darüber hinaus kann natürlich vorgesehen sein, dass eine Identifikation von wenigstens einem der Kommunikationspartner zufällig aus einem vorgegebenen Bereich von vorgebbaren Identifikationen ausgewählt wird und der entsprechende Kommunikationspartner überprüft, ob diese Identifikation bei der beabsichtigten Kommunikationsverbindung bereits belegt ist. Ist dies der Fall, wird eine andere Identifikation aus den vorgebbaren Identifikationen ausgewählt und es erfolgt erneut die Prüfung. Dieser Vorgang wiederholt sich so lange, bis eine entsprechend freie Identifikation aufgefunden worden ist.

Gemäß einer weiteren Ausgestaltung kann vorgesehen sein, dass vor einem Herstellen der Kommunikationsverbindung von dem Rechnersystem des Fahrzeugs und/oder dem mobilen Endgerät ein Initialisierungssignal ausgesendet wird. Mit dem Initialisierungssignal ist es einem Kommunikationspartner möglich, andere Kommunikationspartner auf sein Vorhandensein und seine Kommunikationsfähigkeit hinzuweisen. Ein Initialisierungssignal kann beispielsweise aus einer Codefolge bestehen, die neben einer das Signal als Initialisierungssignal kennzeichnenden Codefolge auch eine Identifikation beziehungsweise Kennung des entsprechenden Kommunikationspartners. enthalten kann. Es kann vorgesehen sein, dass das Initialisierungssignal in regelmäßigen Abständen als Impuls ausgesendet wird, insbesondere, wenn keine Kommunikationsverbindung zu irgendeinem anderen Kommunikationspartner besteht. Natürlich kann auch vorgesehen sein, dass zum Aussenden des Initialisierungssignals eine Autorisierung durch einen Nutzer erforderlich ist. Dies kann zum Beispiel durch eine Nutzereingabe am mobilen Endgerät oder auch am Rechnersystem des Fahrzeugs erfolgen.

Gemäß einer weiteren Ausgestaltung wird vorgeschlagen, dass das Rechnersystem des Fahrzeugs Nutzungsdaten für die Nutzung der mittels der Liste bereitgestellten Dienste des mobilen Endgeräts ermittelt. Nutzungsdaten sind vorzugsweise Daten, die vom Rechnersystem des Fahrzeugs für einen jeweiligen Dienst bereitgestellt werden, damit dieser Dienst eine gewünschte Funktion ausführen kann. Dies kann zum Beispiel dadurch erfolgen, indem das Rechnersystem des Fahrzeugs nach Herstellen der Kommunikationsverbindung eine entsprechende Information vom mobilen Endgerät anfordert, mittels der das Rechnersystem darüber informiert wird, welche Nutzungsdaten für einen jeweiligen Dienst bereitzustellen sind. Die Nutzungsdaten können beispielsweise Daten von Sensoren des Fahrzeugs, Steuerparameter, Konfigurationsdaten oder dergleichen umfassen.

Erfindungsgemäß ist vorgesehen, dass das Rechnersystem des Fahrzeugs die Liste von Dienste vom mobilen Endgerät abruft. Zu diesem Zweck übermittelt das Rechnersystem einen entsprechenden Befehl an das mobile Endgerät, welches daraufhin die ermittelte Liste über die Kommunikationsverbindung an das Rechnersystem des Fahrzeugs übermittelt.

Das Übermitteln der Fahrzeuginformation vom Fahrzeug an das mobile Endgerät umfasst erfindungsgemäß ein Übermitteln von im Rechnersystem des Fahrzeugs implementierten Diensten.

Das mobile Endgerät ist auf diese Weise informiert über den Diensteumfang des Rechnersystems des Fahrzeugs und kann dies für weitere Auswertungen nutzen, insbesondere für die Ermittlung von im Rechnersystem des Fahrzeugs nicht implementierten Diensten.

Erfindungsgemäß wird die Liste von Diensten vom mobilen Endgerät derart erstellt, dass sie ausschließlich Dienste zusätzlich zu bereits im Rechnersystem des Fahrzeugs implementierten Diensten enthält. Dadurch kann die Liste sehr komprimiert sein und lediglich den Zugewinn für das Rechnersystem des Fahrzeugs enthalten, weil die Liste vorzugsweise nur für das Rechnersystem des Fahrzeugs unbekannte Dienste, das heißt, im Rechnersystem des Fahrzeugs nicht implementierte Dienste, enthält. Dies reduziert nicht nur Datenmengen, sondern es kann auch Kommunikationskapazität reduzieren.

Mit der Erfindung wird ferner ein System zur Bereitstellung einer Funktion vorgeschlagen, mit einem Rechnersystem eines Fahrzeugs und mit einem mobilen Endgerät, wobei das System eingerichtet ist, das Verfahren der Erfindung, wie zuvor beschrieben, auszuführen. Dadurch können mit dem System die Vorteile erreicht werden, die das erfindungsgemäße Verfahren bereitstellt.

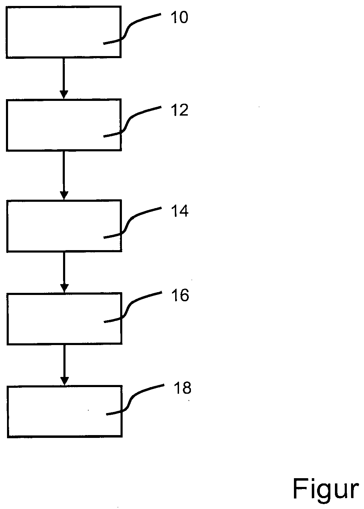

Weitere Vorteile und Merkmale sind der folgenden Beschreibung eines Ausführungsbeispiels zu entnehmen. Das in der Figur dargestellte Ausführungsbeispiel dient lediglich der Erläuterung der Erfindung und soll diese nicht beschränken.

Es zeigt die einzige Figur einen schematischen Verfahrensablauf für ein Verfahren gemäß der Erfindung. Das Verfahren beginnt im Schritt 10 mit dem Aussenden eines Initialisierungssignals von einem mobilen Endgerät, welches vorliegend als Smartphone ausgebildet ist. Eine Empfangseinheit, die an ein Rechnersystem eines vorgegebenen Fahrzeugs angeschlossen ist, erlaubt es dem Rechnersystem, Initialisierungssignale zu empfangen. Die Empfangseinheit ist mit einer Sendeeinheit kombiniert, so dass das Rechnersystem eine Kommunikationsverbindung zu einem Kommunikationspartner, hier dem Smartphone, herstellen kann. Die Kommunikationsverbindung ist vorliegend eine Nahfunkverbindung unter Nutzung des WLAN-Standards. Die Kommunikationsverbindung ist deshalb eine IP-basierte Kommunikationsverbindung. Nachdem das Rechnersystem mittels der Sende-/Empfangseinheit das Initialisierungssignal des Smartphones empfangen hat, wird gemäß eines WLAN-Standards eine Kommunikationsverbindung zwischen dem Rechnersystem des Fahrzeugs und dem mobilen Endgerät gemäß dem auf den Schritt 10 folgenden Schritt 12 hergestellt.

Das Verfahren wird sodann mit Schritt 14 fortgeführt, wobei das Smartphone eine Endgeräteinformation an das Rechnersystem über die Kommunikationsverbindung übermittelt, die das Smartphone als Server kennzeichnet. Das Rechnersystem empfängt die Endgeräteinformation, wertet diese aus und adaptiert die Kommunikation zum Smartphone derart, dass es als Server operiert.

In einem folgenden Schritt, dem Schritt 16, übermittelt das Rechnersystem des Fahrzeugs eine Fahrzeuginformation an das Smartphone. Mit der Fahrzeuginformation kann das Smartphone feststellen, welche technologische Basis im Fahrzeug beziehungsweise dem Rechnersystem des Fahrzeugs verfügbar ist. Zu diesem Zweck kann das Smartphone auf eigene, in dem Smartphone selbst gespeicherte Datenbanken zurückgreifen. Alternativ oder ergänzend kann auch vorgesehen sein, dass das Smartphone sich mit einem globalen Kommunikationsnetz in Verbindung setzt und entsprechend der Fahrzeuginformation die zugehörigen, erforderlichen Daten abruft. Die Fahrzeuginformation kann beispielsweise ein Fahrzeugtyp, eine Fahrzeugidentifikationsnummer, beispielsweise eine Fahrgestellnummer, oder auch dergleichen sein.

Nachdem die Fahrzeuginformation und zugehörige weitergehende Informationen bezüglich des Fahrzeugs und des Rechnersystems im Smartphone verfügbar sind, erfolgt gemäß Schritt 18 ein Bereitstellen einer Liste von verfügbaren Diensten des Smartphones für das Rechnersystem des Fahrzeugs; wobei die Liste wenigstens einen Dienst zusätzlich zu bereits im Rechnersystem des Fahrzeugs implementierten Diensten enthält. Insbesondere enthält die Liste für das Rechnersystem des Fahrzeugs unbekannte, das heißt, neue Dienste. Im Unterschied zu einer Einrichtung als UPnP-Server ist mit der Erfindung auch eine Nutzung von fahrzeugunbekannten Diensten möglich. Zu diesem Zweck wird in diesem Ausführungsbeispiel zugleich mit der Liste auch eine Bedienoberfläche zur Verfügung gestellt, die zur Bedienoberfläche des Rechnersystems des Fahrzeugs kompatibel ist.

In einer alternativen Ausgestaltung kann vorgesehen sein, dass das Bereitstellen der Liste von verfügbaren Diensten durch Abrufen der Liste durch das Rechnersystem des Fahrzeugs vom Smartphone erfolgt.

Das vorgenannte Ausführungsbeispiel dient lediglich der Erläuterung der Erfindung und soll diese nicht beschränken. Insbesondere können natürlich Merkmale und Ausführungsbeispiele in beliebiger Weise miteinander kombiniert werden, um zu weiteren, bedarfsgerechten Ausgestaltungen der Erfindung zu gelangen.

Insbesondere können natürlich verfahrensbezogene Merkmale entsprechend auf Vorrichtungsmerkmale angewendet werden und umgekehrt. Darüber. hinaus kann in dualer Weise die Initialisierung auch dadurch erfolgen, dass das Fahrzeug beziehungsweise das Rechnersystem des Fahrzeugs ein Initialisierungssignal aussendet, welches vom mobilen Endgerät empfangen und ausgewertet wird.

## Patentansprüche

1. Verfahren zur Bereitstellung einer Funktion mittels eines Dienstes in einem Rechnersystem eines vorgegebenen Fahrzeugs, mit den Schritten:
- Herstellen (12) einer Kommunikationsverbindung zwischen dem Rechnersystem des Fahrzeugs und einem mobilen Endgerät,
- Übermitteln (14) einer Endgerätinformation vom mobilen Endgerät an das Rechnersystem des Fahrzeugs, die das mobile Endgerät als Server kennzeichnet,
- Übermitteln (16) einer Fahrzeuginformation vom Rechnersystem des Fahrzeugs an das mobile Endgerät, wobei das Übermitteln der Fahrzeuginformation vom Rechnersystem des Fahrzeugs an das mobile Endgerät ein Übermitteln von im Rechnersystem des Fahrzeugs implementierten Diensten umfasst,
- Bereitstellen (18) einer Liste von verfügbaren Diensten des mobilen Endgeräts für das Rechnersystem des Fahrzeugs derart, dass die Liste wenigstens einen fahrzeugunbekannten Dienst zusätzlich zu bereits im Rechnersystem des Fahrzeugs implementierten Diensten enthält, indem die Liste von Diensten derart erstellt wird, dass sie ausschließlich Dienste zusätzlich zu bereits im Rechnersystem des Fahrzeugs implementierten Diensten enthält, wobei die Dienste eine Bereitstellung einer Funktion im Rechnersystem des Fahrzeugs erlauben, und
- Abrufen der Liste von Diensten vom mobilen Endgerät durch das Rechnersystem des Fahrzeugs, um den wenigstens einen fahrzeugunbekannten Dienst unter Nutzung eines Webservices, der die Funktionalitäten über das Kommunikationsnetzwerk verfügbar macht, nutzbar zu machen.

2. Verfahren nach Anspruch 1, **dadurch gekennzeichnet, dass** dem Rechnersystem des Fahrzeugs vom mobilen Endgerät eine Bedienoberfläche zur Verfügung gestellt wird.

3. Verfahren nach Anspruch 2, **dadurch gekennzeichnet, dass** die Bedienoberfläche zum Rechnersystem des Fahrzeugs kompatibel ist.

4. Verfahren nach einem der Ansprüche 1 bis 3, **dadurch gekennzeichnet, dass** als die Kommunikationsverbindung eine IP-basierte Kommunikationsverbindung verwendet wird.

5. Verfahren nach Anspruch 4, **dadurch gekennzeichnet, dass** das Rechnersystem des Fahrzeugs und/oder das mobile Endgerät selbstständig eine IP-Adresse auswählen.

6. Verfahren nach einem der Ansprüche 1 bis 5, **dadurch gekennzeichnet, dass** vor einem Herstellen (12) der Kommunikationsverbindung von dem Rechnersystem des Fahrzeugs und/oder dem mobilen Endgerät ein Initialisierungssignal (10) ausgesendet wird.

7. Verfahren nach einem der Ansprüche 1 bis 6, **dadurch gekennzeichnet, dass** das Rechnersystem des Fahrzeugs Nutzungsdaten für die Nutzung der mittels der Liste bereitgestellten Dienste des mobilen Endgeräts ermittelt.

8. System zur Bereitstellung einer Funktion, mit einem Rechnersystem eines Fahrzeugs und mit einem mobilen Endgerät, wobei das System eingerichtet ist, das Verfahren nach einem der vorhergehenden Ansprüche auszuführen.

## Claims

1. Method for providing a function by means of a service in a computer system of a given vehicle, comprising the steps:
- making (12) a communication link between the computer system of the vehicle and a mobile terminal,
- transmitting (14) terminal information from the mobile terminal to the computer system of the vehicle which labels the mobile terminal as a server,
- transmitting (16) vehicle information from the computer system of the vehicle to the mobile terminal, wherein transmitting the vehicle information by the computer system of the vehicle to the mobile terminal involves transmitting services implemented in the computer system of the vehicle,
- providing (18) a list of available services of the mobile terminal for the computer system of the vehicle, such that the list contains at least one service unknown to the vehicle in addition to services already implemented in the computer system of the vehicle, in that the list of services is compiled such that it only contains services in addition to services already implemented in the computer system of the vehicle, wherein the services enable the provision of a function in the computer system of the vehicle, and
- calling up the list of services of the mobile terminal by the computer system of the vehicle, in order to make usable the at least one service unknown to the vehicle by using a web service which makes the functionalities available via the communication network.

2. Method according to claim 1, **characterized in that** a user interface is provided to the computer system of the vehicle by the mobile terminal.

3. Method according to claim 2, **characterized in that** the user interface is compatible with the computer system of the vehicle.

4. Method according to any of claims 1 to 3, **characterized in that** an IP-based communication link is used as the communication link.

5. Method according to claim 4, **characterized in that** the computer system of the vehicle and/or the mobile terminal independently select an IP address.

6. Method according to any of claims 1 to 5, **characterized in that** before making (12) the communication link, an initialization signal (10) is sent out by the computer system of the vehicle and/or the mobile terminal.

7. Method according to any of claims 1 to 6, **characterized in that** the computer system of the vehicle determines usage data for the use of the services of the mobile terminal provided by means of the list.

8. System for providing a function, with a computer system of a vehicle and with a mobile terminal, wherein the system is configured to carry out the method according to any of the preceding claims.

## Revendications

1. Procédé pour mettre à disposition une fonction au moyen d'un service dans un ordinateur d'un véhicule prédéterminé, avec les étapes suivantes :
- l'établissement (12) d'une liaison de communication entre l'ordinateur du véhicule et un terminal mobile,
- la transmission (14) d'une information de terminal, du terminal mobile à l'ordinateur du véhicule, laquelle caractérise le terminal mobile en tant que serveur,
- la transmission (16) d'une information de véhicule, de l'ordinateur du véhicule au terminal mobile, la transmission de l'information de véhicule de l'ordinateur du véhicule au terminal mobile comprenant une transmission de services installés dans l'ordinateur du véhicule,
- la mise à disposition (18) d'une liste de services disponibles du terminal mobile pour l'ordinateur du véhicule de telle sorte que la liste contient au moins un service inconnu du véhicule en plus de services déjà installés dans l'ordinateur du véhicule, la liste de services étant élaborée de telle sorte qu'elle contient exclusivement des services en plus de services déjà installés dans l'ordinateur du véhicule, les services permettant une mise à disposition d'une fonction dans l'ordinateur du véhicule, et
- la consultation de la liste de services du terminal mobile par l'ordinateur du véhicule pour rendre utilisable l'au moins un service inconnu du véhicule en utilisant un service Internet qui rend disponible les fonctionnalités par l'intermédiaire du réseau de communication.

2. Procédé selon la revendication 1, **caractérisé en ce qu'**une interface de commande est mise à la disposition de l'ordinateur du véhicule par le terminal mobile.

3. Procédé selon la revendication 2, **caractérisé en ce que** l'interface de commande est compatible avec l'ordinateur du véhicule.

4. Procédé selon l'une des revendications 1 à 3, **caractérisé en ce que** la liaison de communication utilisée est une liaison de communication basée sur le protocole IP.

5. Procédé selon la revendication 4, **caractérisé en ce que** l'ordinateur du véhicule et/ou le terminal mobile sélectionnent de manière autonome une adresse IP.

6. Procédé selon l'une des revendications 1 à 5, **caractérisé en ce que**, avant un établissement (12) de la liaison de communication, un signal d'initialisation (10) est émis par l'ordinateur du véhicule et/ou par le terminal mobile.

7. Procédé selon l'une des revendications 1 à 6, **caractérisé en ce que** l'ordinateur du véhicule détermine des données utiles pour l'utilisation des services du terminal mobile qui sont mis à disposition au moyen de la liste.

8. Système pour mettre à disposition une fonction, avec un ordinateur d'un véhicule et avec un terminal mobile, le système étant conçu pour mettre en oeuvre le procédé selon l'une des revendications précédentes.
